# DEMANDE DE BREVET EUROPEEN

(11) **EP 0 549 431 A1**
(43) Date de publication de la demande: **30.06.1993**
(21) Numéro de dépôt: 92403459.8
(22) Date de dépôt: 17.12.1992
(51) Int. Cl.: B32B 27/08

(54) **Film complexe, notamment destiné à l'emballage de produits alimentaires et le procédé de fabrication**

(30) Priorité: 27.12.1991 FR 9116294
(71) Demandeur: C.M.B. FLEXIBLE, F-16300 Barbezieux St Hilaire (FR)
(72) Inventeur: Gaillard, Yves, F-16600 Ruelle (FR)
(74) Mandataire: Polus, Camille

(57) **Abrégé**

Film complexe, notamment applicable aux produits alimentaires, caractérisé en ce qu'il comprend au moins un support (10) barrière à l'humidité, enduit d'une couche de matière faisant office de barrière aux gaz (14), notamment à l'oxygène et une troisième couche de matière, également barrière à l'humidité, des primaires (12,16) étant disposés entre les différentes couches de façon à permettre une bonne adhésion de l'ensemble des couches sur le support.

## Description

La présente invention a pour objet un film complexe, notamment destiné à l'emballage de produits alimentaires et le procédé de fabrication.

On connaît de nombreux complexes destinés à l'emballage de produits alimentaires, ces complexes ayant des caractéristiques très variées suivant le type de produits alimentaires à protéger.

En effet, ces complexes ont plusieurs rôles, d'abord ils constituent l'emballage physique du produit, ils assurent la protection contre les agressions extérieures en jouant le rôle de barrière, ce qui permet de respecter les conditions d'hygiène préconisées, tout en assurant une bonne conservation du produit lui-même.

Par ailleurs, l'emballage est de plus en plus utilisé comme moyen de commumication et de publicité si bien qui'il doit pouvoir porter des informations réalisées en héliographie ou par tout autre procédé d'impression.

Dans le cas de la présente invention, le complexe recherché a pour but d'assurer une barrière aux gaz de façon générale et plus particulièrement une barrière à l'oxygène de l'air ambiant ainsi qu'une barrière à l'humidité.

De plus, il est souhaitable que ce complexe ne dégage pas de chlore lors d'une incinération, qu'il puisse être imprimé et thermoscellé pour permettre une fermeture hermétique, et enfin qu'il puisse être traité à de grandes cadences et en automatique.

Au niveau des propriétés barrière, on connaît des produits qui sont barrières à l'oxygène lorsque le degré hygrométrique de l'air environnant n'est pas trop important.

C'est ainsi que le copolymère d'éthylène et d'alcool vinylique dénommé E.V.O.H. ou E/VAL selon norme ISO 1043, forme une excellente barrière aux gaz, et plus particulièrement à l'oxygène, lorsqu'il est sec mais devient très perméable aux gaz dès que le taux d'hygrométrie augmente.

Afin que ce copolymère présente une bonne étanchéité aux gaz, et plus particulièrement à l'oxygène, il est nécessaire de le déposer sur un support, généralement après l'avoir dilué dans un solvant, puis l'ensemble est séché et il est nécessaire ensuite d'obtenir une bonne cristallisation de ce copolymère.

Cette cristallisation est obtenue ainsi que le prévoit la mise en oeuvre préconisée par les fabricants grâce à un traitement thermique qui consiste, après séchage et suppression du solvant, à porter à une température de l'ordre de 150° l'ensemble du support et de la couche d'E.V.O.H. On comprend dès lors la nécessité d'avoir un support qui puisse résister à de telles températures sans dégradation. Si des supports tels que des films en polyamide ou en polyester résistent à de telles températures, il n'en est pas de même pour des films en polypropylène par exemple.

Il n'est donc actuellement pas possible de réaliser une couche par enduction d'E.V.O.H. d'un support ne résistant pas à une température au moins égale à 150°.

Or, ainsi que cela a été indiqué, l'E.V.O.H. qui ne subirait pas un tel traitement thermique est encore plus sensible à l'humidité et dans ce cas, il ne joue plus son rôle de barrière aux gaz et encore moins à l'oxygène ce qu' est préjudiciable à la conservation des produits alimentaires contenus à l'intérieur de l'emballage réalisé à partir d'un tel complexe.

Il est nécessaire de rappeler que le prix de revient d'un complexe est important et toute simplification de réalisation peut introduire des baisses sensibles qui, multipliées par les grandes quantités consommées, permettent des économies notables.

D'autre part, certains films support de prix élevés et résistants en température tels que polyamide ou polyester ont une mauvaise résistance à l'humidité tandis que certains autres produits de prix moins élevés et résistants à des températures inférieures à 150°, tels que polypropylène, ont par contre d'excellentes qualités de barrière à l'humidité. La présente invention permet donc d'utiliser tout type de film car il supprime tout traitement thermique à haute température, il confère à l'emballage une haute imperméabilité à l'humidité et aux gaz, ainsi qu'une possibilité de thermoscellabilité et il peut être imprimé recto mais aussi verso.

A cet effet, le film complexe selon l'invention, notamment applicable aux produits alimentaires se caractérisé en ce qu'il comprend au moins un support barrière à l'humidité, enduit d'une couche de matière faisant office de barrière au gaz, notamment à l'oxygène, et une troisième couche de matière également barrière à l'humidité, des primaires étant disposés entre les différentes couches de façon à permettre une bonne adhésion de l'ensemble des couches sur le support.

Selon un mode de réalisation particulier de l'invention, la couche faisant office de barrière à l'oxygène est un copolymère d'éthylène et d'alcool vinylique.

Quant au support il est choisi, par exemple, parmi l'un quelconque des films suivants :
- films polypropylènes ou polyesters orientés, purs, co-extrudés ou enduits,
- films polyamides orientés,
- pellicules cellulosiques enduites avec comme troisième couche, notamment les films soudants barrière à l'humidité à base de polyéthylène, polypropylène ou ionomère.

Selon une autre caractéristique de l'invention, la couche barrière à l'humidité, disposée sur la couche barrière à l'oxygène est une enduction ionomère ou polyoléfinique.

Selon un mode préférentiel de l'invention, le complexe comprend de l'extérieur vers l'intérieur, un film support en polypropylène co-extrudé, un premier primaire du type polyuréthane bicomposants, une couche de copolymère d'éthylène et d'alcool vinylique, un second primaire également du type polyuréthane bicomposants et une enduction ionomère.

Le procédé de fabrication du complexe selon l'invention consiste à déposer un primaire du type polyuréthane bicomposants sur le support, à sécher ce primaire, à effecteur une enduction d'E.V.O.H. diluée dans un solvant, à évaporer le solvant à une température compatible avec le support, à étuver éventuellement le film jusqu'à obtenir une cristallisation suffisante de la couche d'E.V.O.H. puis à rajouter un film soudant en polypropylène par exemple ou une enduction barrière à l'humidité, précédée d'um primaire, de façon à obtenir une thermoscellabilité du produit sur lui-même.

Selon une autre caractéristique du procédé, l'impression est réalisée directement sur la couche d'E.V.O.H. avant de rapporter le film barrière à l'humidité oui directement sur le primaire rapporté sur l'E.V.O.H.

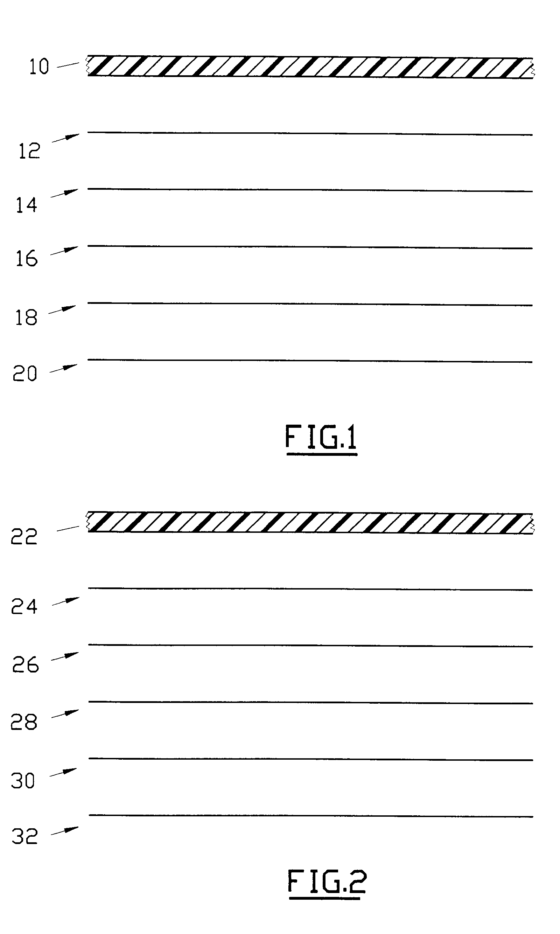

Le procédé et le produit résultant sont décrits ci-après en regard des figures 1 et 2 qui représentent de façon schématique le film complexe selon l'invention, la figure 2 étant une variante de réalisation du procédé de la figure 1.

Sur la figure 1, nous avons représenté schématiquement un film complexe selon l'invention.

De l'extérieur vers l'intérieur, on trouve ainsi, un film support 10, un premier primaire 12, une couche de matériau barrière aux gaz, notamment à l'oxygène 14, un second primaire 16, une impression 18 et une deuxième enduction 20.

Dans le mode de réalisation préféré représenté sur la figure 1, le film support est un film polypropylène sur lequel est déposé un primaire du type polyuréthane bicomposants qui va permettre une bonne adhésion et une bonne mouillabilité de la couche 14 qui est dans le cas présent une couche de copolymère d'éthylène et d'alcool vinylique commercialisé notamment sous la dénomination "SOARNOL". Ce copolymère doit préalablement être dilué dans des solvants adéquats et ensuite l'ensemble du film, du primaire et de l'enduction d'E.V.O.H. est séché à une température compatible avec le polypropylène jusqu'à évaporation du solvant.

Un étuvage complémentaire de l'ensemble à une température comprise entre 50 et 100° C pendant plusieurs jours permet d'obtenir une bonne cristallisation.

Le second primaire qui permet l'accrochage des couches suivantes est également un polyuréthane bicomposants, notamment commercialisé sous la marque "LAMAL" et sur ce primaire, il est prévu une enduction à l'aide d'un matériau barrière à l'humidité qui peut être du type ionomère tel que le produit commercialisé sous la dénomination "SURLYNE" plus particulièrement sous forme de dispersion dans l'eau ou polyoléfinique.

Dans le cas ou il est nécessaire de réaliser une impression telle que référencée en 18, celle-ci est réalisée directement sur le primaire à l'aide d'encres spécifiques de type connu.

On constate donc que le produit alimentaire contenu à l'intérieur de ce complexe est isolé des encres d'impression par l'enduction ionomère ou polyoléfinique.

Selon une variante représentée sur la figure 2, nous avons de l'extérieur vers les l'intérieur les couches 22, 24, 26, 28, 30 et 32.

La couche 22 est un film support du type polypropylène co-extrudé sur lequel est rapporté un primaire identique à la couche 12 de même pour la couche d'E.V.O.H. qui est déposée de la même façon et réalisée comme la couche 14 de la figure 1.

La couche 28 correspondant à l'impression peut être réalisée directement sur la couche d'E.V.O.H. sur laquelle est déposé un adhésif 30 tel qu'un polyuréthane bicomposants commercialisé sous la dénomination LAMAL qui permet une bonne adhésion de la couche de matériau barrière à l'humidité.

Dans cette variante de réalisation, la couche de matériau barrière à l'humidité 32 est un film soudant en copolymère à base de polypropylène.

On a ainsi la possibilité de sceller les emballages chair sur chair ou chair sur peau, c'est à dire que la couche barrière à l'humidité 20 ou 32 peut être scellée soit sur elle-même, soit sur le film support.

Dans ce cas encore, l'encre d'impression est isolée du produit alimentaire par l'adhésif 30 et le film soudant 32.

On constate également que dans ce cas la lecture s'effectue de l'extérieur vers l'intérieur à travers le film, le premier primaire et la couche d'E.V.O.H.

Un autre avantage important de l'invention est celui d'isoler l'impression de l'extérieur, si bien que les frottements des emballages sur eux-mêmes ne provoquent pas la détérioration des impressions. Ainsi l'invention, dont deux exemples ont été décrits en détail ci-avant peut 'être réalisée en mettant en oeuvre le procédé selon l'invention et en choisissant d'associer par exemple les supports suivants :
- films polypropylènes ou polyesters orientés, purs, co-extrudés ou enduits,
- films polyamides orientés,
- pellicules cellulosiques enduites avec comme troisième couche, notamment les films soudants barrière à l'humidité à base de polyéthylène, polypropylène ou ionomère.

## Revendications

1. Film complexe, notamment applicable aux produits alimentaires, caractérisé en ce qu'il comprend au moins un support barrière à l'humidité. enduit d'une couche de matière exempte de chlore faisant office de barrière aux gaz, notamment à l'oxygène et une troisième couche de matière, également barrière à l'humidité, des primaires ou des adhésifs étant disposés entre les différentes couches de façon à permettre une bonne adhésion de l'ensemble des couches sur le support.

2. Film selon la revendication 1, caractérisé en ce que la couche faisant office de barrière aux gaz et notamment à l'oxygène est un copolymère d'éthylène et d'alcool vinylique.

3. Film selon la revendication 1 ou 2, caractérisé en ce que le support barrière à l'humidité est choisi parmi l'un quelconque des films polypropylènes ou polyesters purs. co-extrudés ou enduits, polyamides orientés ou pellicules cellulosiques enduites.

4. Film selon l'une quelconque des revendications précédentes, caractérisé en ce que la couche barrière à l'humidité est disposée sur la couche barrière aux gaz et notamment à l'oxygène est une enduction ionomère ou polyoléfinique.

5. Film selon l'une quelconque des revendications précédentes. caractérisé en ce qu'il comprend, de l'extérieur vers l'intérieur, un film support en polypropylène, un premier primaire du type polyuréthane bicomposants, une couche de copolymère d'éthylène et d'alcool vinylique, un second primaire adhésif également du type polyuréthane bicomposants et une enduction ionomère barrière à l'humidité.

6. Procédé de fabrication du film selon l'une quelconque des revendications 1 à 5, caractérisé en ce qu'on enduit un support barrière à l'humidité, d'une couche de produit barrière au gaz, notamment à l'oxygène, exempte de chlore, cette couche de produit barrière aux gaz étant elle-même recouverte d'un matériau barrière à l'humidité.

7. Procédé selon la revendication 6, caractérisé en ce qu'il consiste à déposer un primaire du type polyuréthane bi-composants sur un film support, à sécher ce primaire, à effectuer une enduction d'E.V.O.H. diluée dans des solvants, à évaporer des derniers à une température compatible avec le support, à étuver le film jusqu'à obtenir une cristallisation suffisante de la couche d'E.V.O.H. avant de recouvrir d'un matériau barrière à l'humidité.

8. Procédé selon la revendication 7, caractérisé en ce que l'enduction barrière à l'humidité est remplacée par un film soudant, également barrière à l'humidité.
